# FASCICULE DE BREVET EUROPEEN

(11) **EP 1 939 384 B1**
(45) Date de publication et mention de la délivrance du brevet: **02.11.2011**
(21) Numéro de dépôt: 07124015.4
(22) Date de dépôt: 21.12.2007
(51) Int. Cl.: E05D 15/10, E05B 17/00, B60J 5/06, B60J 1/16

(54) **Dispositif d'obturation d'une baie ménagée dans la carrosserie d'un véhicule à pion mobile formant pêne, et véhicule correspondant**
Vorrichtung zur Abdichtung eines in die Karosserie eines Fahrzeugs eingelassenen Öffnungsfelds mit Hilfe eines beweglichen Metallstücks, das einen Verschlussriegel bildet, und entsprechendes Kraftfahrzeug
Device for locking an opening made in the body of a vehicle with a mobile pin forming a bolt, and corresponding vehicle

(30) Priorité: 22.12.2006 FR 0611346
(43) Date de publication de la demande: 02.07.2008
(73) Titulaire: Advanced Comfort Systems France SAS - ACS France, 79300 Bressuire (FR)
(72) Inventeur: Leduque, Cédrick, 17100, SAINTES (FR)
(74) Mandataire: Bioret, Ludovic

(56) Documents cités:
- EP-A- 1 659 247
- EP-A1- 0 857 844
- GB-A- 1 218 990
- US-A- 3 538 642

## Description

### 1. Domaine de l'invention

Le domaine de l'invention est celui des baies de véhicules automobiles. Plus précisément, l'invention concerne les dispositifs d'obturation d'une baie ménagée dans la carrosserie d'un véhicule, ou dans une portière du véhicule, et comprenant une partie mobile coulissante susceptible de libérer ou de fermer une ouverture.

### 2. Techniques de l'art antérieur

Classiquement, pour obturer la baie d'un véhicule, qu'il s'agisse d'une automobile, d'un véhicule utilitaire, d'un camion, d'un autobus ou d'un wagon de chemin de fer, on rapporte une vitre, maintenue par un cadre de liaison. Ce dernier présente une partie interne et une partie externe, qui viennent pincer simultanément les bords de la glace et de l'ouverture ménagée dans la carrosserie, avec une garniture d'étanchéité.

La technique la plus couramment répandue pour l'ouverture et la fermeture d'une vitre de portière est de rendre celle-ci mobile verticalement dans son propre plan, en la faisant pénétrer ou sortir du caisson ou de la garniture de la portière. On connaît également des panneaux coulissants horizontalement, le long de rails formés dans un cadre.

Cette technique est aujourd'hui couramment utilisée et des solutions pour l'automatiser sont connues. L'équipement des automobiles en vitres électriques est aujourd'hui très répandu.

Cette technique présente cependant de nombreux inconvénients relatifs, notamment, aux problèmes d'étanchéité.

Une autre technique a été proposée par le titulaire de la présente demande de brevet. Cette technique est notamment décrite dans les documents de brevet EP-0 778 168 et EP-0 857 844. Le dispositif d'obturation (appelé par la suite "baie flush") présenté dans ces documents comprend un ensemble fixe et une partie, ou panneau, mobile par rapport à cet ensemble fixe. La partie mobile est reliée à l'ensemble fixe par des éléments fonctionnels qui assurent la mobilité requise et qui sont rapportés sur la face de la partie fixe tournée vers l'intérieur du véhicule.

Une telle baie flush peut être montée intégralement indépendamment du véhicule, et rapportée, depuis l'extérieur, dans le logement défini à cet effet sur la carrosserie du véhicule. Elle peut également être solidarisée, en particulier par collage à la partie inférieure d'une portière, selon la technique décrite dans le document de brevet EP-1 022 172. On résout ainsi la plupart des problèmes d'étanchéité identifiés plus haut.

Sur le plan esthétique, la baie flush présente, vue de l'extérieur, un aspect lisse, affleurant, du fait qu'aucun cadre n'est nécessaire sur le contour de l'ouverture formée dans l'ensemble fixe.

Le mouvement de la partie mobile peut être, par exemple, basculant ou coulissant. On décrit ci-après, rapidement, un exemple de ce dernier cas.

Pour assurer un coulissement de la partie mobile, constituée généralement par un panneau transparent, on prévoit par exemple un dispositif de guidage comportant un premier et un second rail de guidage montés fixes sur l'ensemble fixe (ou structure fixe) de la baie, de part et d'autre de l'ouverture fermée par le panneau mobile. Celui-ci est monté sur les rails, pour coulisser par exemple selon une direction longitudinale, dans un plan de coulissement entre une (ou plusieurs) position d'ouverture et une position intermédiaire de dégagement dans laquelle il est en regard de la baie et dégagé de celle-ci.

On notera qu'il a été envisagé de déplacer la partie mobile entre la position d'obturation et la position intermédiaire de dégagement suivant principalement deux techniques :
- une première technique pour laquelle la partie mobile reste constamment dans un plan sensiblement parallèle au plan de la partie fixe lors de son déplacement ; et
- un deuxième technique pour laquelle le déplacement de la partie mobile est une combinaison d'un mouvement dans une direction parallèle au plan de la partie fixe et d'un mouvement dans une direction perpendiculaire à ce plan, sous la forme d'un mouvement général de louvoiement, selon lequel le bord distal de la partie mobile se trouve, en fin de course, dans le plan de la baie (la partie mobile étant alors « en travers », entre le plan d'obturation et le plan de coulissement). Il suffit alors de ramener le bord proximal, par exemple manuellement, pour assurer l'obturation.

L'invention se rapporte plus particulièrement à cette deuxième technique d'obturation appelée « baie flush » coulissante et « louvoyante », à ses variantes et ses perfectionnements. Plus précisément, Les inventeurs visent par la présente à proposer au moins une technique inédite de verrouillage de telles « baies flush louvoyantes ». Toutefois, l'invention peut de façon plus large s'appliquer à tous les dispositifs d'obturation dont la cinématique d'ouverture et/ou de fermeture inclut un déplacement (en y) entre une position d'ouverture et une position intermédiaire de dégagement, dans un plan parallèle au plan de l'ensemble fixe, et un déplacement (en x) dans ce plan parallèle.

### 3. Inconvénients des solutions de l'art antérieur

Plusieurs solutions ont été proposées pour le verrouillage d'un panneau mobile d'un dispositif d'obturation d'une baie dans la position fermée, et le cas échéant dans des positions d'ouverture choisies. Elles sont souvent peu ergonomiques et/ou pratiques, et nécessitent notamment de procéder à un effort, par exemple de serrage, pour obtenir le verrouillage.

Parmi celles-ci, on connaît une technique présentée dans le document EP-1 659 247, selon laquelle on prévoit au moins un pêne coopérant avec une gâche formée dans un des éléments de support et/ou de guidage, la gâche présentant au moins une rampe, de façon que le passage d'une position verrouillée à une position déverrouillée des moyens de verrouillage entraîne le passage du panneau mobile d'un premier plan vers un second plan, et inversement. Deux pênes peuvent être prévus, pour verrouiller efficacement le panneau mobile en parties haute et basse.

Cette approche est efficace, sur le plan fonctionnel. Cependant, elle reste peu ergonomique, du fait que le déplacement du pêne est perpendiculaire à l'axe de coulissement, ce qui suppose des manipulations peu aisées. Ceci est encore plus vrai dans le cas où deux pênes sont prévus.

### 4. Objectifs de l'invention

L'invention a donc notamment pour objectif de pallier les inconvénients de l'art antérieur cités ci-dessus.

Plus précisément, l'invention a pour objectif de proposer une technique de verrouillage d'un panneau coulissant d'un dispositif d'obturation d'une baie, mobile suivant les directions x et y d'un même plan (sans décalage en z), qui permette de simplifier les opérations d'ouverture et de fermeture de ce panneau, et le verrouillage de celui-ci en position fermée, et le cas échéant en position ouverte.

L'invention a également pour objectif de fournir un tel dispositif d'obturation d'une baie qui permette un verrouillage, un déverrouillage et un coulissement fiables et sans effort et dont la manoeuvre peut être aisément et efficacement motorisée.

Ainsi, un objectif particulier de l'invention est de fournir un tel dispositif, qui permette de commander facilement le coulissement du panneau mobile, quel que soit le sens de déplacement (ouverture ou fermeture), tout en conservant des sécurités quant à sa manipulation, par un enfant en bas âge par exemple.

Un autre objectif de l'invention est de fournir un tel dispositif d'obturation d'une baie qui assure un enchâssement complet du panneau dans la baie lors d'une manoeuvre de fermeture.

L'invention a encore pour objectif de fournir un tel dispositif d'obturation d'une baie qui soit simple à réaliser, à monter sur une portière ou sur une paroi d'un véhicule, et qui permette une utilisation aisée et fiable.

Un autre objectif de l'invention est de fournir un tel dispositif d'obturation d'une baie qui conserve l'ensemble des avantages des "baies flush" déjà développées par le titulaire de la présente demande, et notamment :
- aspect esthétique affleurant ;
- aspects aérodynamiques ;
- facilité et coût réduit de fabrication ;
- facilité et coût réduit de montage.

### 5. Principes généraux de l'invention

Ces objectifs ainsi que d'autres qui apparaîtront par la suite, sont atteints à l'aide d'un dispositif d'obturation d'une baie ménagée dans la carrosserie d'un véhicule automobile, comprenant une structure fixe dans laquelle est définie une ouverture et un panneau coulissant monté sur au moins un élément de maintien et/ou de guidage solidaire de ladite structure fixe et mobile entre :
- une position d'obturation de ladite ouverture, dans le plan formé par ladite structure fixe; et
- une position de coulissement, dans un plan de coulissement sensiblement parallèle audit plan formé par ladite structure fixe.

Selon l'invention, ledit élément de maintien et/ou de guidage présente au moins un rail de guidage en coulissement, dont l'axe de coulissement est sensiblement parallèle au plan formé par ladite structure fixe, et une gâche, sensiblement parallèle audit axe de coulissement, et ledit panneau coulissant porte un premier pion guidé dans ledit rail de guidage lorsque ledit panneau coulissant est dans ladite position de coulissement, et assurant une fonction de pêne, coopérant avec ladite gâche, lorsque ledit panneau est dans ladite position d'obturation, ledit premier pion étant mobile par rapport audit panneau coulissant, de façon à prendre au moins :
- une position verrouillée, dans laquelle ledit premier pion pénètre dans ladite gâche ;
- une position déverrouillée, dans laquelle ledit premier pion est dégagé de ladite gâche.

Ainsi, un tel dispositif exploite, de façon inventive, un pion de guidage déjà monté classiquement sur les panneaux coulissants des dispositifs d'obturation des baies de véhicule, et en particulier sur les « baies flush », dans la fonction de verrouillage du panneau coulissant, en le rendant mobile par rapport au panneau coulissant.

D'autre part, la gâche étant sensiblement parallèle à l'axe de coulissement du rail, la transition entre une position de coulissement et la position de verrouillage du panneau s'effectue avantageusement sans changement brusque de direction. Il est à noter que suivant les modes de réalisation de l'invention, la gâche peut être distincte du rail ou bien constituer une partie du rail.

On notera que le terme « sensiblement » ne doit pas être entendu ici au sens strict. Au contraire, ce terme signifie dans le contexte de l'invention que la gorge de la gâche est principalement orientée suivant l'axe de coulissement du rail tout en pouvant être pouvant être inclinée d'un angle pouvant aller jusqu'à 90°, sans l'égaler, par rapport à cette direction de coulissement du rail.

Par ailleurs, le mouvement du premier pion par rapport au panneau coulissant peut être avantageusement mis en oeuvre, comme présenté par la suite, par simple actionnement d'une poignée. En outre, le mouvement de verrouillage ou de déverrouillage d'un tel dispositif d'obturation s'effectue sans cisailler ses joints d'étanchéité.

On notera par ailleurs que le terme « plan » doit ici s'entendre dans une acception élargie : le plan formé par la baie est généralement courbe, selon une, voire deux, directions (cela justifie également, dans certains cas, le terme « sensiblement »).

Selon un mode de réalisation préférentiel de l'invention, un tel dispositif d'obturation comprend une poignée de commande solidaire dudit premier pion et mobile dans une direction sensiblement parallèle audit axe de coulissement dudit rail de guidage.

Ainsi, le panneau coulissant peut être verrouillé, ou déplacé lorsqu'il est sensiblement aligné avec la direction de coulissement du rail, en tirant sur la poignée et, inversement, déverrouillé en exerçant une simple poussée sur la poignée, ce qui représente au plan ergonomique un atout pour un utilisateur.

De façon avantageuse, un tel dispositif d'obturation comprend des moyens de rappel tendant à ramener ledit premier pion dans ladite position verrouillée.

Ainsi, dès que la poignée est relâchée, le premier pion est repoussé vers la gâche et le panneau se verrouille automatiquement.

Selon un aspect préférentiel de l'invention, le déplacement dudit panneau entre ladite position d'obturation et ladite position de coulissement et/ou le verrouillage dudit panneau et/ou le déverrouillage dudit panneau est motorisé.

Notamment, des moyens de motorisation tels que, par exemple, des crémaillères, des câbles, des vis sans fins ou une combinaison de ces moyens, peuvent être prévus pour actionner ladite poignée et/ou déplacer le panneau dans les rails.

Selon un mode de réalisation avantageux, ladite gâche et ledit rail de guidage communiquent par l'intermédiaire d'une première portion de rail.

Ainsi, le premier pion est guidé pour pénétrer dans la gâche.

Selon un aspect avantageux, un dispositif d'obturation tel que décrit ci-dessus comprend un premier patin de guidage monté dans ledit rail et présentant une première lumière coïncidant sensiblement avec celle de ladite première portion de rail, dans laquelle peut coulisser ledit premier pion

Ainsi, le premier patin permet d'augmenter la surface d'appui du panneau sur le rail. En outre, la lumière formée dans le premier patin permet au premier pion de se déplacer librement au travers de ce patin lors du verrouillage et, permet également, à ce même pion d'entraîner ce patin lors du déplacement du panneau.

Selon un aspect particulier complémentaire, ledit panneau comprend un doigt coulissant dans une deuxième lumière dudit premier patin, comprise dans un plan sensiblement perpendiculaire audit axe de coulissement dudit rail.

Selon un mode de réalisation particulièrement avantageux, ledit panneau coulissant porte un deuxième pion, et ledit deuxième pion coopère avec une deuxième portion de rail d'inclinaison sensiblement opposée à l'inclinaison de ladite première portion de rail.

Ainsi, en guidant les pions dans deux portions de rail d'inclinaisons opposées et donc d'écartement variable, on dispose d'un système de maintien des pions, et donc du panneau, dans une position proche de la position de verrouillage, pouvant tendre le cas échéant à repousser le panneau vers le plan de la structure fixe, en cas de défaut de la fonction de verrouillage du premier pion dans la gâche.

Préférentiellement, lorsque ledit premier pion est guidé dans ladite première portion de rail, ledit deuxième pion vient en butée sur une extrémité de ladite deuxième portion de rail, de façon à permettre le passage dudit panneau de ladite position d'obturation à une position déverrouillée dans un plan incliné par rapport audit plan d'obturation, par rotation dudit panneau autour de l'axe dudit deuxième pion.

Ainsi, le jeu fonctionnel peut être réduit entre l'ouverture de la structure fixe et le bord du panneau sensiblement à l'aplomb de l'axe du deuxième pion, par comparaison avec la valeur des jeux mis en oeuvre pour les techniques connues de « baies-flush louvoyantes ». En conséquence, cette technique permet d'éviter les problèmes d'étanchéité qui peuvent résulter d'une valeur trop importante de ce jeu.

De façon préférentielle, ledit deuxième pion coulisse dans une lumière d'un deuxième patin coulissant dans ledit rail, ladite lumière étant comprise dans un plan perpendiculaire à l'axe de coulissement dudit rail.

Ainsi, le panneau peut être avantageusement porté par deux patins. Selon encore un mode de réalisation particulièrement avantageux, ledit panneau est monté sur un premier et un second éléments de maintien et/ou de guidage solidaires de la structure fixe.

Ainsi, on peut verrouiller symétriquement le panneau sur deux bords opposés, notamment en actionnant une même poignée.

L'invention concerne également un véhicule automobile comprenant au moins un dispositif d'obturation d'une baie tel que décrit ci-dessus.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre en perspective, et dans une représentation éclatée, un mode de réalisation d'un dispositif d'obturation selon l'invention ;
- la figure 2 précise l'action de la poignée du panneau coulissant de la figure 1 sur le déplacement relatif du premier pion par rapport à ce panneau coulissant ;
- les figures 3A à 3C illustrent dans des vues de détail de la partie inférieure de la baie de la figure 1, représentée sous forme éclatée, l'aspect respectivement :
   - d'un rail (figure 3A) ;
   - du premier patin (figure 3B)
   - du deuxième patin (figure 3C) ;
- les figures 4A à 4D présentent respectivement des positions successives prises par le panneau coulissant et les éléments assurant les fonctions de guidage et de verrouillage du dispositif d'obturation, lors du déverrouillage et de l'ouverture du dispositif de la figure 1.

### 7. Description d'un mode de réalisation particulier de l'invention

Comme déjà indiqué, le principe général de l'invention repose notamment sur la mise en oeuvre d'un dispositif d'obturation exploitant un pion de guidage dans la fonction de verrouillage/déverrouillage du panneau coulissant, qui joue ainsi le rôle d'un pêne, en le rendant mobile par rapport au panneau coulissant.

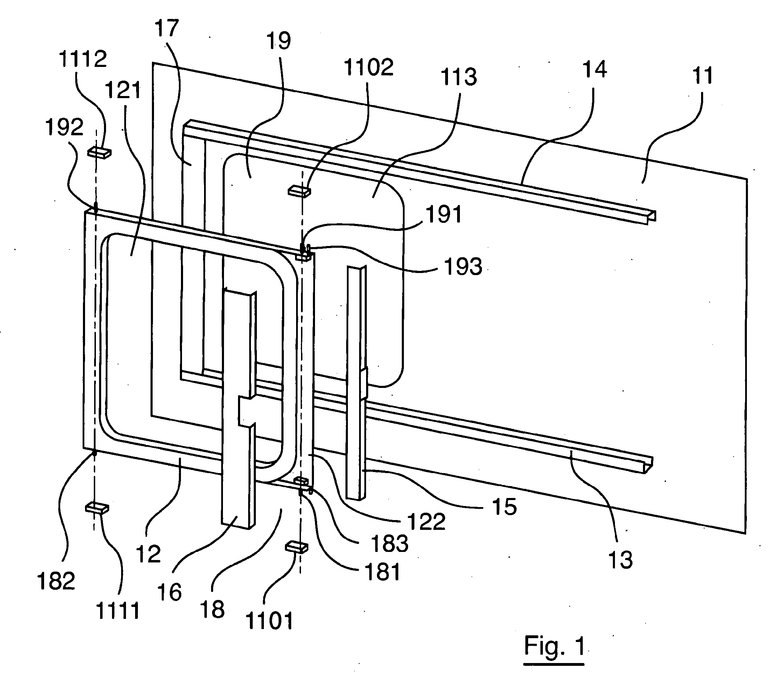

La figure 1 illustre, dans une vue éclatée, un mode de réalisation d'un dispositif selon l'invention d'obturation d'une baie ménagée dans une paroi latérale de la carrosserie d'un véhicule. Ce dispositif d'obturation comprend une structure fixe 11, encore appelée ensemble fixe ou panneau fixe, dans laquelle est percée une ouverture 113, et qui est solidaire d'au moins un élément de maintien et/ou de guidage sur lequel est monté un panneau coulissant mobile 12. En l'occurrence le panneau coulissant comprend une vitre 121 munie d'un cadre 122, susceptible de coulisser le long d'un premier rail de guidage 13 et d'un deuxième rail de guidage 14, sensiblement parallèles et montés en partie inférieure et en partie supérieure de l'ensemble fixe 11, et reliés par une traverse, le tout formant ici l'élément de maintien et/ou de guidage. Ces rails 13, 14 sont rapportés sur la face tournée vers l'intérieur du véhicule de l'ensemble fixe. Dans d'autres cas, les rails peuvent ne pas être reliés par une traverse, et former deux éléments de maintien et/ou de guidage séparés.

Dans ce mode de réalisation, le panneau 12 peut coulisser tout en étant guidé dans les rails 13 et 14 selon une direction sensiblement horizontale. Une butée d'inviolabilité 17, ou traverse, visant à réduire les risques d'effraction par forçage du panneau coulissant est disposée verticalement à une extrémité des rails 13 et 14.

Le cadre 122 du panneau 12 est pourvu sur son bord inférieur d'un premier ensemble de guidage 18 par rapport à la structure fixe 11 suivant l'axe de coulissement du rail 13, et, sur son bord supérieur, d'un deuxième ensemble de guidage 19 collaborant avec le rail 14.

Chacun de ces ensembles de guidage 18 et 19 comprend un premier pion (encore appelé pêne) 181, respectivement 191, mobile par rapport au panneau 12 et un deuxième pion 182, respectivement 192, fixé au cadre du panneau 12.

Dans ce mode de réalisation, le panneau 12 porte sur des patins 1101 et 1111 dans le rail 13 et sur des patins 1102 et 1112 dans le rail 14. Un doigt 183, respectivement 193, permet d'entraîner le patin 1101, respectivement 1102, avec le panneau 12 lors de son coulissement dans le rail 13, respectivement 14.

Le déverrouillage et le verrouillage du panneau 12 sont mis en oeuvre en poussant progressivement sur une poignée 15 de commande de la fermeture/ouverture et/ou du verrouillage/déverrouillage du panneau coulissant 12, ou respectivement en relâchant la poignée. La poignée 15 agit symétriquement pour déplacer les premiers pions 181 et 191 par rapport au cadre 122 et ainsi permettre le verrouillage ou le déverrouillage du panneau 12.

Avantageusement, la poignée 15, lorsqu'elle est relâchée jusqu'à sa position verrouillée, est sensiblement affleurante avec la surface d'un cache 16 fixé sur le cadre 122.

La poignée 15 comprend en outre des zones dont l'ergonomie a été étudiée pour faciliter sa préhension. Dans un mode de réalisation particulier, il peut également être prévu que l'actionnement de la poignée pour le verrouillage ou le coulissement du panneau coulissant est motorisé et puisse être contrôlé par l'intermédiaire d'une commande déportée. Dans encore un autre mode de réalisation, on peut envisager de munir la poignée, pour sécuriser son fonctionnement, d'un bouton de blocage d'empêchant son mouvement, notamment pour protéger un enfant qui tenterait d'ouvrir par lui-même le panneau coulissant mobile.

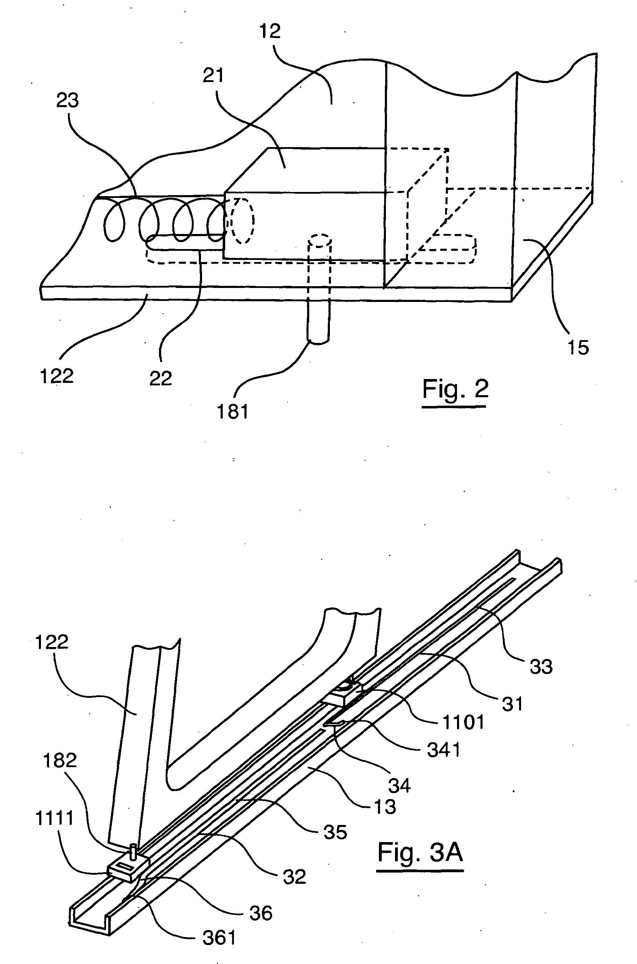

La figure 2 précise l'action de la poignée 15 sur la pièce de support 21 du pion 181. Partant de la position verrouillée, la poignée, lorsqu'elle est poussée vers l'intérieur du cadre 122, déplace la pièce de support 21, et donc le pion 181, par rapport au panneau 12 au travers de la lumière 22 formée dans le cadre 122, ce qui permet de déverrouiller le panneau, comme précisé plus en détail par la suite. D'autre part, dans ce mouvement, la pièce de support 21 comprime des moyens de rappel 23, en l'occurrence un ressort dans ce mode de réalisation, qui permet de ramener le premier pion 181 dans sa position verrouillée lorsque la poignée est relâchée.

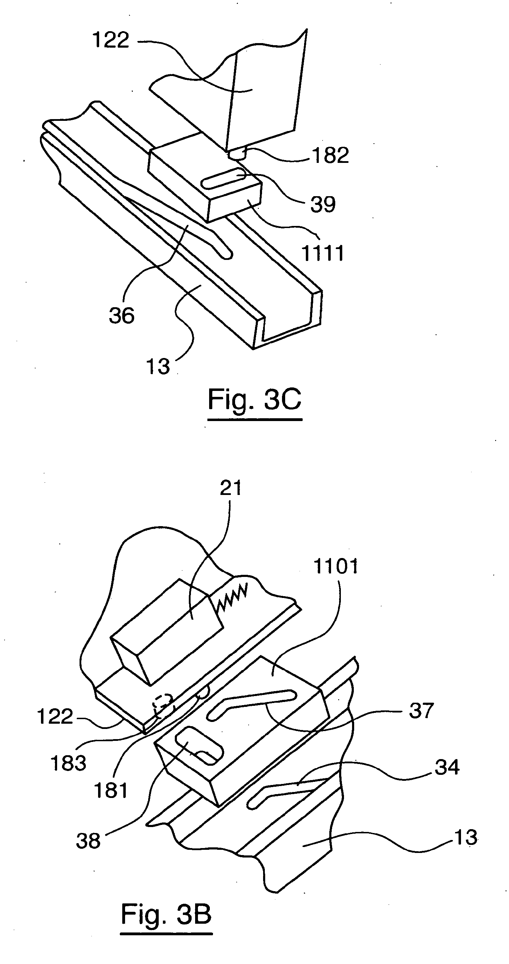

En référence aux figures 3A à 3C, on précise la conformation des rails (figure 3A) et des patins (figures 3B et 3C) dans des vues de détail de la partie inférieure de la baie de la figure 1, représentée sous forme éclatée.

Comme présenté figure 3A, le premier pion 181 est prévu pour se déplacer dans un premier chemin de rail 31 et le deuxième pion 182 dans un second chemin de rail 32. Consécutivement, des chemins de rail (non représentés) sont formés à l'identique dans le rail 14 pour guider le bord supérieur du panneau 12.

Ces premier et second chemins de rail 31, 32 sont alignés selon l'axe de coulissement du rail 13 et d'extension sensiblement égale à la largeur du panneau 12 suivant l'axe de coulissement du rail 13, pour permettre le dégagement total du panneau 12 par rapport à l'ouverture 113 de la structure fixe 11.

Le premier chemin de rail 31 est constitué d'une portion rectiligne de coulissement 33 orientée suivant l'axe de coulissement du rail 13 communiquant avec une première portion de rail 34 débouchant dans une gorge de blocage en forme de gâche 341, encore appelée gâche, avec laquelle coopère le premier pion 181 pour verrouiller le panneau 12, dans sa fonction de pêne. La première portion de rail 34 forme un angle aigu rentrant avec la portion de coulissement 33 dont la valeur est de façon avantageuse, sensiblement égale à 45°, dans ce mode de réalisation de l'invention.

Dans une variante de ce mode de réalisation de l'invention, il peut être envisagé que la gâche et le rail soient deux éléments distincts (non reliés), sans sortir du cadre de l'invention.

De façon complémentaire, le second chemin de rail 32 comprend une portion de coulissement rectiligne 35 se prolongeant par une deuxième portion de rail 36 d'inclinaison opposée à celle de la première portion de rail 34 selon une direction légèrement infléchie par rapport à l'axe de coulissement du rail.

En outre, la deuxième portion de rail de 36 débouche à son extrémité dans une gorge de blocage 361 du panneau dans la position verrouillée de l'ensemble de guidage 18.

La géométrie du premier patin 1101 est illustrée plus en détail sur la figure 3B. Le patin 1101 présente une première lumière 37 d'inclinaison et, plus généralement, de contour sensiblement identique à celle de la première portion de rail 34 prolongée par la gâche 341. Par sensiblement, on entend que des jeux ou des défauts existant, ou pouvant apparaître, entre le contour de la première lumière 37 et de la première portion de rail 34 doivent être pris en compte dans la mesure où ces contours doivent concorder lorsque la première lumière 37 est superposée sur la première portion de rail 34, pour permettre au premier pion 181 de se déplacer dans la première portion de rail 34 sans interférer avec le patin 1101. Une deuxième lumière 38, encore appelée glissière, formée dans le patin 1101 est prévue pour permettre au doigt 183 de coulisser suivant une direction perpendiculaire à l'axe de coulissement du rail 13 afin d'entraîner le patin 1101.

La longueur du doigt 183 est par ailleurs inférieure à l'épaisseur du patin 1101 afin d'éviter que le doigt 183 frotte sur la surface du rail 13.

La figure 3C illustre la forme du deuxième patin 1111. Ce patin 1111 est percé d'une lumière 39, disposée dans la direction perpendiculaire à l'axe de coulissement du rail 13, pour le passage du deuxième pion 182 dans laquelle il peut coulisser librement pour entraîner le deuxième patin 1111 lors du coulissement du panneau 12.

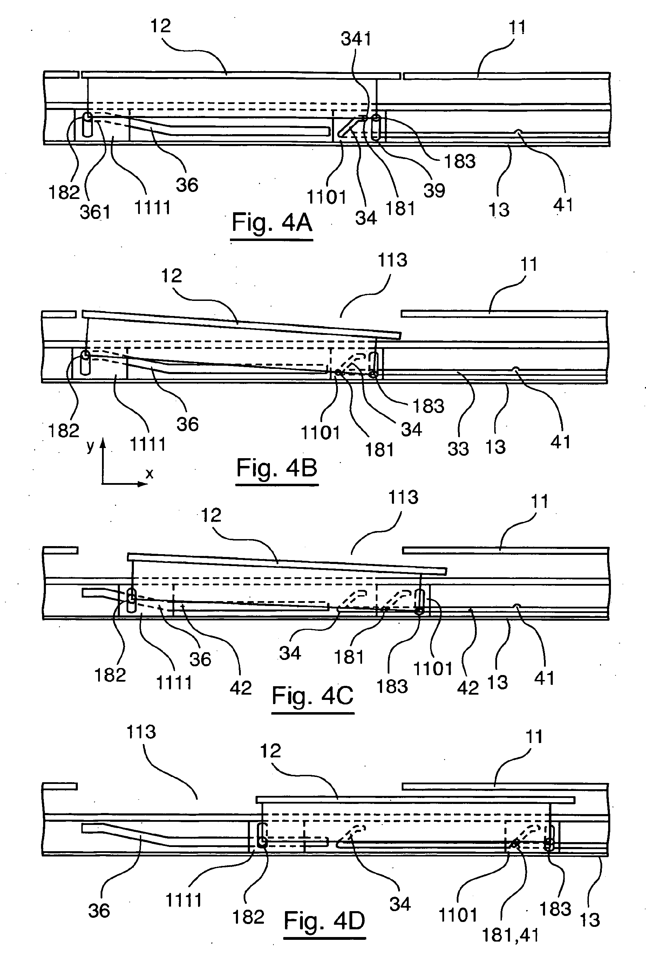

On présente ci-après une décomposition en trois étapes du mouvement louvoyant de déverrouillage et de coulissement du panneau 12 jusqu'à son blocage dans une position d'ouverture prédéterminée le long des rails 13 et 14, les positions successives prise par le dispositif d'obturation étant illustrés par les figures 4A à 4D, dans une vue de dessus de la partie inférieure de la baie. Le verrouillage du panneau 12 d'une position d'ouverture prédéterminée jusque dans la position d'obturation est réciproquement mis en oeuvre en réalisant ces trois étapes dans un ordre inverse.

Dans la première position (voir figure 4A), correspondant à la position d'obturation de l'ouverture 113 de la structure fixe 11, le panneau 12 est compris dans le plan de la structure fixe 11 et affleure avec celui-ci. Le premier pion 181 est en position verrouillée, ou plus précisément inséré dans la gorge de blocage formant gâche, 341 à l'extrémité de la portion de rail 34, et maintenu dans cette position par le ressort de rappel 23 et le deuxième pion 182 est en butée sur le fond de la gorge 361 du second chemin de rail 32. Dans cette position verrouillée, les pions 181 et 182 et le doigt 183 sont sensiblement alignés, ce qui impose au doigt 183 de prendre place à l'extrémité dirigée vers l'extérieur du véhicule de la deuxième lumière 39 du patin 1101.

Au cours de la première étape, encore appelée étape de déverrouillage, le panneau 12, en réponse à la poussée exercée sur la poignée, pivote autour de l'axe du deuxième pion 182 entre la position d'obturation et une deuxième position (voir figure 4B), encore appelée position de dégagement, dans laquelle le premier pion, ou pêne, 181 a été libéré de la première portion de rail 34 et peut être engagé dans la portion de coulissement 33 du premier chemin de rail 31.

Entre la position d'obturation et cette position de dégagement, et sous l'action de la poignée, le premier pion 181 a coulissé le long du bord inférieur du cadre 122, vers la gauche dans ce mode de représentation de la baie, en étant guidé en x et en y dans la première portion de rail 34. En conséquence, le premier pion, pour se déplacer dans la première portion de rail 34, a entraîné dans son mouvement le panneau 12 dans la direction perpendiculaire au plan du panneau. Le panneau ne pouvant pas se déplacer suivant la direction de l'axe de coulissement du rail, son bord gauche étant maintenu en butée dans cette direction, l'entraînement du panneau par le pion conduit alors à son pivotement autour de l'axe du deuxième pion 182 et à un déplacement du patin 1101 vers la gauche par l'intermédiaire du doigt 183 pour rester à l'aplomb du bord droit du panneau 12.

Dans la deuxième étape, encore appelée étape de coulissement, le panneau 12 peut être tiré vers la droite pour coulisser dans les rails 13 et 14, en maintenant la poignée pressée.

Le guidage conjugué en x et en y du bord gauche du panneau solidaire du deuxième pion dans le deuxième chemin de rail 32 (voir figure 4C) permet le décalage du panneau par rapport au plan de la structure fixe, suivant un mouvement de louvoiement, jusqu'à une position intermédiaire (l'emplacement des pions 181 et 182 dans cette position intermédiaire est signalé par le repère numérique 42) dans un plan sensiblement parallèle au plan de la structure fixe.

À partir de cette position intermédiaire, le panneau coulisse suivant l'axe de coulissement du rail, les premiers 181, 191 et deuxièmes pions 182, 192 étant guidés dans les portions rectilignes de coulissement 33 et 35.

Lors de la troisième étape, le panneau est déplacé jusqu'à une position prédéterminée (figure 4D) dans laquelle il est bloqué en position d'ouverture dans un cran 41 formé dans la portion de coulissement 33 du premier chemin de rail 31. Le blocage du panneau s'effectue en relâchant la poignée, ce qui entraîne, sous l'action du ressort de rappel 23, un déplacement en y du premier pion 181 qui vient se loger dans le cran 41.

Dans d'autres modes de réalisation de l'invention, il peut également être envisagé de prévoir plusieurs crans sur le premier chemin de rail, afin de permettre un blocage du panneau coulissant suivant différentes positions d'ouverture.

Il est à noter que pour verrouiller le panneau une fois le panneau tiré vers la position intermédiaire, il suffit de relâcher la poignée, le ressort de rappel poussant le premier pion jusqu'au fond de la gâche.

D'autre part, la technique proposée par l'invention permet de réduire le jeu entre le bord gauche du panneau mobile et l'ouverture qui est classiquement important par conception sur ce type de dispositif de « baie-flush » à mouvement louvoyant et pose de nombreux problèmes, notamment en termes d'étanchéité et d'esthétique.

Le dispositif d'obturation selon l'invention peut équiper une portière de véhicule, un panneau latéral de carrosserie, une porte ou un panneau arrière, un pavillon, etc. Le véhicule peut notamment être un véhicule de tourisme, un véhicule utilitaire, un autocar... Un tel véhicule peut comprendre un ou plusieurs dispositifs d'obturation tels que décrits ci-dessus, dont chaque panneau coulissant peut lui même être monté sur un ou plusieurs éléments de maintien et/ou de guidage.

## Revendications

1. Dispositif d'obturation d'une baie ménagée dans la carrosserie d'un véhicule automobile, comprenant une structure fixe (11) dans laquelle est définie une ouverture (113) et un panneau coulissant (12) monté sur au moins un élément de maintien et/ou de guidage solidaire de ladite structure fixe et mobile entre :
- une position d'obturation de ladite ouverture, dans le plan formé par ladite structure fixe ; et
- une position de coulissement, dans un plan de coulissement sensiblement parallèle audit plan formé par ladite structure fixe ;
**caractérisé en ce que** ledit élément de maintien et/ou de guidage présente au moins un rail de guidage en coulissement (13 ; 14), dont l'axe de coulissement est sensiblement parallèle au plan formé par ladite structure fixe, et une gâche (341), sensiblement parallèle audit axe de coulissement,
et **en ce que** ledit panneau coulissant (12) porte un premier pion (181 ; 191) guidé dans ledit rail de guidage (13 ; 14) lorsque ledit panneau coulissant est dans ladite position de coulissement, et assurant une fonction de pêne, coopérant avec ladite gâche, lorsque ledit panneau est dans ladite position d'obturation,
ledit premier pion (181 ; 191) étant mobile par rapport audit panneau coulissant (12), de façon à prendre au moins :
- une position verrouillée, dans laquelle ledit premier pion pénètre dans ladite gâche ;
- une position déverrouillée, dans laquelle ledit premier pion est dégagé de ladite gâche.

2. Dispositif d'obturation selon la revendication 1, **caractérisé en ce qu'**il comprend une poignée de commande (15) solidaire dudit premier pion (181 ; 191) et mobile dans une direction sensiblement parallèle audit axe de coulissement dudit rail de guidage.

3. Dispositif d'obturation selon l'une quelconque des revendications 1 à 2, **caractérisé en ce qu'**il comprend des moyens de rappel (23) tendant à ramener ledit premier pion (181 ; 191) dans ladite position verrouillée.

4. Dispositif d'obturation selon l'une des revendications 1 à 3, **caractérisé en ce que** le déplacement dudit panneau entre ladite position d'obturation et ladite position de coulissement et/ou le verrouillage dudit panneau et/ou le déverrouillage dudit panneau est motorisé.

5. Dispositif d'obturation selon l'une quelconque des revendications 1 à 4, **caractérisé en ce que** ladite gâche (341) et ledit rail de guidage (13) communiquent par l'intermédiaire d'une première portion de rail (34).

6. Dispositif d'obturation selon la revendication 5, **caractérisé en ce qu'**il comprend un premier patin de guidage (1101 ; 1102) monté dans ledit rail et présentant une première lumière (37) coïncidant sensiblement avec celle de ladite première portion de rail (34), dans laquelle peut coulisser ledit premier pion (181 ; 191).

7. Dispositif d'obturation selon la revendication 6, **caractérisé en ce que** ledit panneau coulissant (12) comprend un doigt coulissant (183 ; 193) dans une deuxième lumière (38) dudit premier patin (1101 ; 1102), comprise dans un plan sensiblement perpendiculaire audit axe de coulissement dudit rail.

8. Dispositif d'obturation selon l'une des revendications 5 à 7, **caractérisé en ce que** ledit panneau coulissant porte un deuxième pion (182 ; 192),
et **en ce que** ledit deuxième pion (182 ; 192) coopère avec une deuxième portion de rail (36) d'inclinaison sensiblement opposée à celle de ladite première portion de rail (36).

9. Dispositif d'obturation selon la revendication 8, **caractérisé en ce que**, lorsque ledit premier pion (181 ; 191) est guidé dans ladite première portion de rail (34), ledit deuxième pion (182 ; 192) vient en butée sur une extrémité de ladite deuxième portion de rail (36), de façon à permettre le passage dudit panneau (12) de ladite position d'obturation à une position déverrouillée dans un plan incliné par rapport audit plan d'obturation, par rotation dudit panneau autour de l'axe dudit deuxième pion.

10. Dispositif d'obturation selon l'une quelconque des revendications 8 et 9, **caractérisé en ce que** ledit deuxième pion (182) coulisse dans une lumière (39) d'un deuxième patin (1111) coulissant dans ledit rail (13), ladite lumière (39) étant comprise dans un plan perpendiculaire à l'axe de coulissement dudit rail (13).

11. Dispositif d'obturation selon l'une quelconque des revendications 1 à 10, **caractérisé en ce que** ledit panneau (12) est monté sur un premier et un second éléments de maintien et/ou de guidage solidaires de la structure fixe (11).

12. Véhicule automobile comprenant une baie ménagée dans sa carrosserie **caractérisé en ce qu'**il comprend au moins un dispositif d'obturation selon l'une des revendications 1 à 11,
ledit dispositif d'obturation comprenant une structure fixe (11) dans laquelle est définie une ouverture (113) et un panneau coulissant (12) mobile monté sur au moins un élément de maintien et/ou de guidage solidaire de ladite structure fixe et mobile entre :
- une position d'obturation de ladite ouverture, dans le plan formé par ladite structure fixe ; et
- une position de coulissement, dans un plan de coulissement sensiblement parallèle audit plan formé par ladite structure fixe ;
ledit élément de maintien et/ou de guidage présentant au moins un rail de guidage en coulissement (13 ; 14), dont l'axe de coulissement est sensiblement parallèle au plan formé par ladite structure fixe, et une gâche (341), sensiblement parallèle audit axe de coulissement,
et ledit panneau coulissant (12) portant un premier pion (181 ; 191) guidé dans ledit rail de guidage (13 ; 14) lorsque ledit panneau coulissant (12) est dans ladite position de coulissement, et assurant une fonction de pêne, coopérant avec ladite gâche, lorsque ledit panneau est dans ladite position d'obturation,
ledit premier pion (181 ; 191) étant mobile par rapport audit panneau coulissant (12), de façon à prendre au moins :
- une position verrouillée, dans laquelle ledit premier pion pénètre dans ladite gâche ;
- une position déverrouillée, dans laquelle ledit premier pion est dégagé de ladite gâche.

## Claims

1. Device for closing off an opening formed in the bodywork of a motor vehicle, comprising a fixed structure (11) in which an aperture (113) is defined and a sliding panel (12) mounted on at least one maintaining and/or guide element integral with said fixed structure and mobile between:
- a closing off position of said aperture, in the plane formed by said fixed structure; and
- a sliding position, in a sliding plane substantially parallel to said plane formed by said fixed structure;
**characterised in that** said maintaining and/or guide element has at least one sliding guide rail (13; 14), of which the axis of sliding is substantially parallel to the plane formed by said fixed structure, and a strike (341), substantially parallel to said axis of sliding,
and **in that** said sliding panel (12) carries a first peg (181; 191) guided in said guide rail (13; 14) when said sliding panel is in said sliding position, and providing a function of a bolt, cooperating with said strike, when said panel is in said closing off position,
said first peg (181; 191) being mobile in relation to said sliding panel (12), in such a way as to take at least:
- one locked position, wherein said first peg penetrates into said strike;
- an unlocked position, wherein said first peg is released from said strike.

2. Device for closing off according to claim 1, **characterised in that** it comprises a control handle (15) integral with said first peg (181; 191) and mobile in a direction substantially parallel to said axis of sliding of said guide rail.

3. Device for closing off according to any of claims 1 to 2, **characterised in that** it comprises return means (23) tending to return said first peg (181; 191) in said locked position.

4. Device for closing off according to one of claims 1 to 3, **characterised in that** the displacement of said panel between said closing off position and said sliding position and/or the locking of said panel and/or the unlocking of said panel is motorised.

5. Device for closing off according to any of claims 1 to 4, **characterised in that** said strike (341) and said guide rail (13) communicate via the intermediary of a first portion of rail (34).

6. Device for closing off according to claim 5, **characterised in that** it comprises a first guide shoe (1101; 1102) mounted in said rail and having a first hole (37) coinciding substantially with that of said first portion of rail (34), wherein said first peg (181; 191) can slide.

7. Device for closing off according to claim 6, **characterised in that** said sliding panel (12) comprises a sliding finger (183; 193) in a second hole (38) of said shoe (1101; 1102), comprised in a plane substantially perpendicular to said axis of sliding said rail.

8. Device for closing off according to one of claims 5 to 7, **characterised in that** said sliding panel carries a second peg (182; 192),
and **in that** said second peg (182; 192) cooperates with a second portion of rail (36) of an inclination substantially opposite to that of said first portion of rail (36).

9. Device for closing off according to claim 8, **characterised in that**, when said first peg (181; 191) is guided in said first portion of rail (34), said second peg (182; 192) comes against one end of said second portion of rail (36), in such a way as to allow for the passage of said panel (12) from said closing off position to an unlocked position in a plane inclined in relation to said closing off plane, via rotation of said panel around the axis of said second peg.

10. Device for closing off according to any of claims 8 and 9, **characterised in that** said second peg (182) slides in a hole (39) of a second shoe (1111) sliding in said rail (13), said hole (39) being comprised in a plane perpendicular to the axis of sliding of said rail (13).

11. Device for closing off according to any of claims 1 to 10, **characterised in that** said panel (12) is mounted on a first and a second maintaining and/or guide elements integral with the fixed structure (11).

12. Motor vehicle comprising an opening formed in its bodywork **characterised in that** it comprises at least one device for closing off according to one of claims 1 to 11,
said device for closing off comprising a fixed structure (11) wherein is defined an aperture (113) and a mobile sliding panel (12) mounted on at least one maintaining and/or guide element integral with said fixed structure and mobile between:
- a closing off position of said aperture, in the plane formed by said fixed structure; and
- a sliding position, in a sliding plane substantially parallel to said plane formed by said fixed structure;
said maintaining and/or guide element having at least one guide sliding rail (13; 14), of which the axis of sliding is substantially parallel to the plane formed by said fixed structure, and a strike (341), substantially parallel to said axis of sliding,
and said sliding panel (12) carrying a first peg (181; 191) guided in said guide rail (13; 14) when said sliding panel (12) is in said sliding position, and providing a function of a bolt, cooperating with said strike, when said panel is in said closing off position,
said first peg (181; 191) being mobile in relation to said sliding panel (12), in such a way as to take at least:
- one locked position, wherein said first peg penetrates into said strike;
- one unlocked position, wherein said first peg is released from said strike.

## Patentansprüche

1. Vorrichtung zum Verschließen einer Fensteröffnung in der Karosserie eines Kraftfahrzeugs, umfassend eine feste Struktur (11), in der eine Öffnung (113) definiert ist, und ein Schiebefenster (12), das auf mindestens einem Halte- und/oder Führungselement montiert ist, das mit der festen Struktur fest verbunden ist und beweglich ist zwischen:
- einer Position zum Verschließen der Öffnung in der Ebene, die durch die feste Struktur gebildet wird; und
- einer Schiebeposition in einer Schiebeebene, die im Wesentlichen parallel zu der Ebene ist, die durch die feste Struktur gebildet wird;
**dadurch gekennzeichnet, dass** das Halte- und/oder Führungselement mindestens eine Schiebeführungsschiene (13; 14), deren Schiebeachse zu der Ebene, die durch die feste Struktur gebildet wird, im Wesentlichen parallel ist, und eine Schließkappe (341), die zur Schiebeachse im Wesentlichen parallel ist, aufweist,
und dass das Schiebefenster (12) einen ersten Stift (181; 191) trägt, der in der Führungsschiene (13; 14) geführt wird, wenn das Schiebefenster sich in der Schiebeposition befindet, und eine Fensterriegelfunktion erfüllt, indem er mit der Schließkappe zusammenwirkt, wenn das Fenster sich in der Verschlussposition befindet,
wobei der erste Stift (181; 191) im Verhältnis zu dem Schiebefenster (12) beweglich ist, um mindestens Folgendes einzunehmen:
- eine verriegelte Position, in welcher der erste Stift in die Schließkappe eindringt;
- eine entriegelte Position, in welcher der erste Stift von der Schließkappe befreit ist.

2. Verschlussvorrichtung nach Anspruch 1, **dadurch gekennzeichnet, dass** sie einen Bedienungsgriff (15) umfasst, der mit dem ersten Stift (181; 191) fest verbunden ist und in einer Richtung beweglich ist, die im Wesentlichen parallel zur Schiebeachse der Führungsschiene ist.

3. Verschlussvorrichtung nach einem der Ansprüche 1 bis 2, **dadurch gekennzeichnet, dass** sie Rückstellmittel (23) umfasst, die dazu neigen, den ersten Stift (181; 191) in die verriegelte Position zurückzubringen.

4. Verschlussvorrichtung nach einem der Ansprüche 1 bis 3, **dadurch gekennzeichnet, dass** die Bewegung des Fensters zwischen der Verschlussposition und der Schiebeposition und/oder die Verriegelung des Fensters und/oder die Entriegelung des Fensters motorisiert ist bzw. sind.

5. Verschlussvorrichtung nach einem der Ansprüche 1 bis 4, **dadurch gekennzeichnet, dass** die Schließkappe (341) und die Führungsschiene (13) über einen ersten Schienenabschnitt (34) in Verbindung stehen.

6. Verschlussvorrichtung nach Anspruch 5, **dadurch gekennzeichnet, dass** sie einen ersten Führungsschuh (1101; 1102) umfasst, der in der Schiene montiert ist und einen ersten Schlitz (37) aufweist, der im Wesentlichen mit dem des ersten Schienenabschnitts (34) übereinstimmt, in dem der erste Stift (181; 191) gleiten kann.

7. Verschlussvorrichtung nach Anspruch 6, **dadurch gekennzeichnet, dass** das Schiebefenster (12) einen Schiebefinger (183; 193) in einem zweiten Schlitz (38) des ersten Schuhs (1101; 1102) umfasst, der in einer Ebene liegt, die zur Schiebeachse der Schiene im Wesentlichen rechtwinklig ist.

8. Verschlussvorrichtung nach einem der Ansprüche 5 bis 7, **dadurch gekennzeichnet, dass** das Schiebefenster einen zweiten Stift (182; 192) trägt,
und dass der zweite Stift (182; 192) mit einem zweiten Schienenabschnitt (36) zusammenwirkt, dessen Neigung derjenigen des ersten Schienenabschnitts (36) im Wesentlichen entgegengesetzt ist.

9. Verschlussvorrichtung nach Anspruch 8, **dadurch gekennzeichnet, dass**, wenn der erste Stift (181; 191) in dem ersten Schienenabschnitt (34) geführt wird, der zweite Stift (182; 192) an einem Ende des zweiten Schienenabschnitts (36) zum Anschlag kommt, um den Übergang des Fensters (12) von der Verschlussposition in eine entriegelte Position in einer Ebene, die im Verhältnis zur Verschlussebene geneigt ist, durch eine Drehung des Fensters um die Achse des zweiten Stifts zu ermöglichen.

10. Verschlussvorrichtung nach einem der Ansprüche 8 und 9, **dadurch gekennzeichnet, dass** der zweite Stift (182) in einem Schlitz (39) eines zweiten Schuhs (1111) gleitet, der in der Schiene (13) gleitet, wobei der Schlitz (39) in einer Ebene liegt, die zur Schiebeachse der Schiene (13) rechtwinklig ist.

11. Verschlussvorrichtung nach einem der Ansprüche 1 bis 10, **dadurch gekennzeichnet, dass** das Fenster (12) auf einem ersten und einem zweiten Halte- und/oder Führungselement montiert ist, das mit der festen Struktur (11) fest verbunden ist.

12. Kraftfahrzeug, umfassend eine Fensteröffnung, die in seiner Karosserie eingerichtet ist, **dadurch gekennzeichnet, dass** es mindestens eine Verschlussvorrichtung nach einem der Ansprüche 1 bis 11 umfasst,
wobei die Verschlussvorrichtung eine feste Struktur (11), in der eine Öffnung (113) definiert ist, und ein Schiebefenster (12) aufweist, das auf mindestens einem Halte- und/oder Führungselement beweglich montiert ist, das mit der festen Struktur fest verbunden ist, und beweglich ist zwischen:
- einer Position zum Verschließen der Öffnung in der Ebene, die durch die feste Struktur gebildet wird; und
- einer Schiebeposition in einer Schiebeebene, die im Wesentlichen parallel zu der Ebene ist, die durch die feste Struktur gebildet wird;
wobei das Halte- und/oder Führungselement mindestens eine Schiebeführungsschiene (13; 14), deren Schiebeachse zu der Ebene, die durch die feste Struktur gebildet wird, im Wesentlichen parallel ist, und eine Schließkappe (341), die zur Schiebeachse im Wesentlichen parallel ist, aufweist,
und das Schiebefenster (12) einen ersten Stift (181; 191) trägt, der in der Führungsschiene (13; 14) geführt wird, wenn das Schiebefenster (12) sich in der Schiebeposition befindet, und eine Fensterriegelfunktion erfüllt, die mit der Schließkappe zusammenwirkt, wenn das Fenster sich in der Verschlussposition befindet,
wobei der erste Stift (181; 191) im Verhältnis zu dem Schiebefenster (12) beweglich ist, um mindestens Folgendes einzunehmen:
- eine verriegelte Position, in welcher der erste Stift in die Schließkappe eindringt;
- eine entriegelte Position, in welcher der erste Stift von der Schließkappe befreit ist.
